# EUROPEAN PATENT APPLICATION

(11) **EP 1 967 880 A1**
(43) Date of publication of application: **10.09.2008**
(21) Application number: 08152298.9
(22) Date of filing: 05.03.2008
(51) Int. Cl.: G02B 7/36, G03B 13/36, H04N 5/232

(54) **Autofocus Method for a Camera**

(30) Priority: 06.03.2007 KR 20070022067
(71) Applicant: Samsung Electronics Co., Ltd., Suwon-si, Gyeonggi-do 442-743 (KR)
(72) Inventor: Yoon, Young-Kwon, Yeongtong-gu, Suwon-si, Gyeonggi-do (KR); Lee, Yong-Gu, Yeongtong-gu, Suwon-si, Gyeonggi-do (KR); Kim, Myoung-Won, Yeongtong-gu, Suwon-si, Gyeonggi-do (KR)
(74) Representative: Grünecker, Kinkeldey, Stockmair & Schwanhäusser Anwaltssozietät

(57) **Abstract**

An autofocus method and apparatus provides a reduction in time required for performing the autofocusing procedure, preferably occurring during a one-time frame exposure. A distance between a focus of a lens system and a light receiving plane of an image sensor is varied, an image frame is formed by sequentially exposing pixels on the light receiving plane during a time period while varying the distance between the focus and the light receiving plane, a plurality of sub-blocks are set on the image frame and edge values are obtained for the respective plurality of sub-blocks. The maximum edge value is determined from among the obtained edge values, and a focus position of the lens system is identified based on the maximum edge value. The lens system is moved to the focus position.

## Description

### BACKGROUND OF THE INVENTION

### Field of the Invention

The present invention relates generally to a camera. More particularly, the present invention relates to an autofocus (AF) method for a camera and a reduction in the time required for the AF to accurately focus on an object.

### Description of the Related Art

A conventional camera generally includes a lens system for forming an image of a subject and an image sensor for detecting the image formed by the lens system as an electric signal. An ability to focus the lens system varies according to a distance between the focus and the subject. In order to obtain a sharp, high-definition image, a light receiving plane of the image sensor should be positioned within a depth of field of the lens system. Accordingly, in a conventional camera, specifically, a macro function (in other words, a short-distance photographing function) is sometimes incorporated. However, such cameras with macro functions may encounter a considerable change in the focus position depending on the distance away from the subject being photographed. Conventional cameras are sometimes necessarily with means for automatically adjusting a focus according to the distance between the camera and the subject, to reduce the amount of error that could be introduced by focusing manually, and to simplify the use of the camera so that virtually anyone can take quality photographs by pointing the camera at an object and pressing the shutter.

Conventionally known autofocusing approaches include one of camera-to-subject distance measurement, and focal distance estimation based on preview-image analysis. Recently proposed compact digital cameras commonly adopt the latter approach.

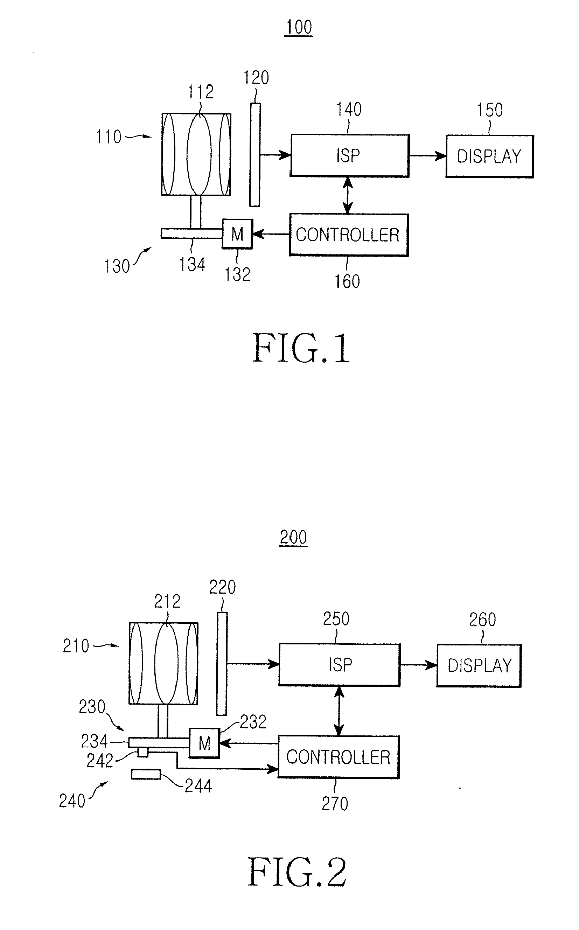

FIG. 1 is a block diagram view of a typical autofocus camera. The autofocus camera 100 includes a lens system 110, an image sensor 120, a driver 130, an image signal processor (ISP) 140, a display 150, and a controller 160.

The lens system 110 forms an image of a subject, and includes one or more lenses 112. The image sensor 120 detects the image formed by the lens system 110 and generates an electric signal. The ISP 140 processes the image signal output from the image sensor 120 in units of frames and outputs an image frame converted so as to be suitable for display characteristics of the display 150, e.g., a frame size, image quality, resolution, or the like. The display 150 displays the image frame applied from the ISP 140 on the display. In addition, the display 150 displays an autofocus (to be abbreviated as "AF" hereinafter) window of the image frame on the display 150 during the autofocus procedure. The driver 130 drives the lens system 110 so as to be movable under the control of a controller 160. The driver 130 includes a motor (M) 132 for supplying a driving force, and a guide 134 moving the lens system 110 back and forth there along using a driving force. The controller 160 identifies a focus position depending on a distance away from the subject by the autofocus procedure and controls the driver 130 to move the lens system 110 to the focus position.

Still referring to the camera shown in FIG. 1, the controller 160 performs the autofocus procedure including the steps (a) through (f) in the following manner.

In step (a), start and end positions, as well as multiple intermediate positions between the start and end positions for the lens system 110 are set, and then the lens system 110 is moved to the start position.

In step (b), an image frame is formed in the start position of the lens system 110.

In step (c), an edge value is obtained from the image frame within the AF window. Here, an "edge" typically corresponds to the contour of a subject, that is, the boundary of the image frame, in which the brightness sharply changes. The "edge value" indicates a brightness change of an "edge" portion. In more detail, the "edge value" is calculated by obtaining a brightness of each of the respective pixels of the image sensor 120, determining whether the boundary between a pair of pixels that are adjacent row-wise with respect to the image sensor 120 fall under the edge or not by comparing a brightness difference between the pair of pixels with a reference value, and then cumulatively summing brightness differences of all pairs of pixels falling under the edge.

In step (d), there is a determination as to whether the lens system 110 is positioned in the end position.

If the lens system 110 is not positioned in the end position, the lens system 110 is moved to a subsequent position in step (e), followed by sequentially performing steps (b) through (d).

If the lens system 110 is positioned in the end position, the maximum edge value among the edge values obtained in steps (a) through (e) is determined in step (f), followed by step (g) by moving the lens system 110 to a position corresponding to the maximum edge value.

The autofocus procedure is completed by performing various operations up to step (g), and the camera 100 captures an image of a subject in a focus-adjusted state.

However, the above-described, conventional autofocus method entails at least the following disadvantage.

For example, still referring to FIG. 1, it is assumed that a camera 100 being equipped with a 1/3.2" size image sensor 120 has a focal distance between approximately 10 cm and ∞ (infinity). In order to achieve a focus adjustment, the lens system 110 in the conventional autofocus camera is generally configured to have a maximum moving distance of approximately 0.25 cm and a depth of field of approximately 0.015 cm. In such a case, intervals between each of the various positions set in step (a) should be smaller than the depth of field. The number of times the step (a) is repeated, i.e., the number of times the lens system 110 is moved to a next or subsequent position during a time period of the autofocus procedure, is approximately 20, meaning that a number of times the frame exposure of the image sensor 120 is performed is approximately 20. In a conventional mobile terminal camera (such as a camera-phone), a frame exposure speed is approximately 15 frames per second during a preview operation, which means that more than one second is required for autofocusing.

Furthermore, in consideration of a time required for capturing an image, a total of approximately 2 seconds is required from the autofocus procedure to the image capturing operation, which seems too slow to appeal today's camera users, finally causing considerable inconvenience and discomfort to the users, as well as those who might be posing for a photograph and have to stand still during the period in which the camera is focusing and then photographing.

Accordingly, there is a need in the art for an autofocus method for a camera, by which a quicker autofocus function reduces the inconvenience and discomfort to users but retains or even improves the quality of the focusing process.

### SUMMARY OF THE INVENTION

An aspect of the present invention is to address at least some of the problems and/or disadvantages described herein above and to provide at least the advantages described herein below. Accordingly, an aspect of the present invention is to provide an autofocus method for a camera having a faster and more accurate autofocus function.

According to one exemplary aspect of the present invention, there is provided an autofocus method, including the steps of varying a distance between a focus of a lens system and a light receiving plane of an image sensor, forming an image frame by sequentially exposing pixels on the light receiving plane during a time period of the varying of the distance between the focus and the light receiving plane, setting a plurality of sub-blocks on the image frame and obtaining edge values for the respective plurality of sub-blocks, determining the maximum edge value among the obtained edge values, and identifying a focus position of the lens system based on the maximum edge value.

### BRIEF DESCRIPTION OF THE DRAWINGS

The above and other exemplary aspects, features and advantages of the present invention will become more apparent from the following detailed description when taken in conjunction with the accompanying drawings in which:
FIG. 1 is a block diagram of a typical autofocus camera;
FIG. 2 is a block diagram of an autofocus camera according to an exemplary embodiment of the present invention;
FIG. 3 is a plan view of an image sensor shown in FIG. 2;
FIG. 4 illustrates a display shown in FIG. 2;
FIGS. 5A and 5B illustrate an exemplary movement pattern of a lens system shown in FIG. 2; and
FIGS. 6A through 6C illustrate various exemplary movement patterns of moving a lens system shown in FIG. 2.

### DETAILED DESCRIPTION OF THE INVENTION

Preferred exemplary embodiments of the present invention will now be described in detail with reference to the annexed drawings. In the drawings, the same or similar elements are denoted by the same reference numerals even though they are depicted in different drawings. In the following exemplary description, a detailed description of known functions and configurations may be omitted for clarity and conciseness when such inclusion could obscure appreciation of the invention by a person of ordinary skill in the art.

FIG. 2 comprises a block diagram of an autofocus camera according to an exemplary embodiment of the present invention.

The camera 200 typically includes a lens system 210, an image sensor 220, a driver 230, an encoder 240, an image signal processor (ISP) 250, a display 260, and a controller 270.

The lens system 210 forms an image of a subject, and includes one or more lenses 212. The one or more lenses 212 may comprise convex lenses, concave lenses, or the like. The lens system 210 is preferably rotationally symmetrical in a longitudinal direction with respect to an optical axis, and the optical axis can be defined as an axis passing through constant points on planes of the one or more lenses 212. For example, a biconvex lens includes a first lens plane and a second lens plane having the same radius of curvature.

Still referring to FIG. 2, the image sensor 220 detects the subject image formed by the lens system 210 as an electric signal. The ISP 250 processes the image signal applied from the image sensor 220 in units of frames and outputs an image frame converted to be suitable for display characteristics of the display 260 (a size, image quality, resolution, or the like). Suitable examples used as the image sensor 220 include (but are not limited to) a CCD (charge-coupled device) image sensor, a CMOS (complementary metal-oxide semiconductor) image sensor, and the like. The image sensor 220 commonly exposes pixels based on a rolling shutter mechanism.

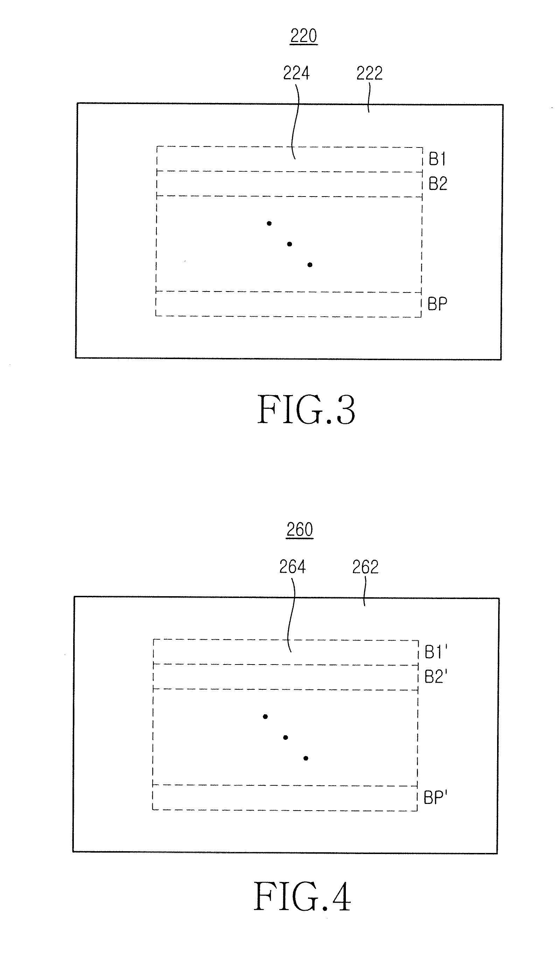

FIG. 3 is a plan view of the image sensor 220 shown in FIG. 2.

The image sensor 220 includes a light receiving plane 222 facing the lens system 210. A plurality of pixels are arranged on the light receiving plane 222 in an M*N matrix typically composed of M rows and N columns. The image sensor 220 has an AF window 224 as a reference of focus adjustment. The AF window 224 is positioned at the center of the light receiving plane 222 and a size of the AF window 224 is approximately two third (2/3) that of the light receiving plane 222. The AF window 224 of the image sensor 220 is a virtual area typically set by the controller 270. The AF window 224 is preferably divided into a plurality of sub-blocks B1~BP, and each of the plurality of sub-blocks B1~BP includes at least one selected among a plurality of pixel rows. If necessary, the size of the AF window 224 may be set to be the same as that of the light receiving plane 222.

As shown in FIG. 3, the frame exposure of the image sensor 220 is implemented based on a rolling shutter mechanism. According to the rolling shutter mechanism, pixels of each row are exposed column-wise in sequence (which is called row-wise scanning), while pixels of each column are exposed row-wise in sequence.

As shown in FIG. 2, the display 260 displays an image frame applied from the ISP 250 on a screen. In addition, the display 260 displays the AF window of the image frame on the screen during the autofocus procedure.

FIG. 4 illustrates an example of the display 260 shown in FIG. 2. Now referring to FIG. 4, the AF window 264 is preferably positioned at the center of the screen 262 and a preferable size of the AF window 264 is approximately two third (2/3) that of the screen 262. The AF window 264 comprises a virtual area that is set by the controller 270 and is visually identified by a user. The AF window 264 is divided into a plurality of sub-blocks B1'~BP', and the plurality of sub-blocks B1'~BP' preferably correspond to the plurality of sub-blocks B1~BP in a one-to-one relationship. The driver 230 drives the lens system 210 to be movable under the control of the controller 270, and includes a motor (M) 232 supplying a driving force, and a guide 234 moving the lens system 210 back and forth along its optical axis using the driving force.

Now referring again to FIG. 2, the encoder 240 detects a position of the lens system 210, and outputs a position detection signal indicating the position of the lens system 210 to the controller 270. The encoder 240 may be preferably implemented as a combination of a general Hall sensor 242 and a permanent magnet 244, but other types of sensors could be used. The Hall sensor 242 is preferably arranged on the guide 234 so as to be movable together with the lens system 210, while the permanent magnet 244 is fixed arranged. The Hall sensor 242 outputs variable voltages according to the magnitude of a magnetic field applied by the permanent magnet 244, and thus as the lens system 210 moves, the magnitude of the magnetic field sensed by the Hall sensor changes due to the change in distance between the two items. The controller 270 detects the position of the lens system 210 from the voltage of the position detection signal applied from the Hall sensor 242.

The controller 270 identifies a focus position depending on a distance of the camera away from the subject in the autofocus procedure and controls the driver 230 to move the lens system 210 to the identified focus position.

The autofocus procedure performed by the controller 270 includes the following steps (a) through (f).

In step (a), the AF window 224 of the image sensor 220 is divided into a plurality of sub-blocks B1~BP. Here, each of the plurality of sub-blocks B1~BP includes at least one selected among a plurality of pixel rows. For example, assuming that the AF window 224 has a 300*600 matrix, each of the plurality of sub-blocks B1~BP may be arranged in a 10*20 matrix.

Assuming that the start and end positions and multiple intermediate positions between the start and end positions are set for the lens system 210, and a time required for the lens system 210 to move from the start position to the end position is set to be about the same as the overall exposure time period (TP-T1) of the sub-blocks B1~BP, in step (b), a time interval obtained by dividing the overall exposure time period by the number of the sub-blocks B1~BP is set to be the same as the row-wise scanning time.

The steps (a) and (b), which are initializing steps, may be implemented in a program stored in the controller 270.

In step (c), the lens system 210 is moved to the start position.

In step (d), the lens system 210 is moved according to the movement pattern set by the controller 270.

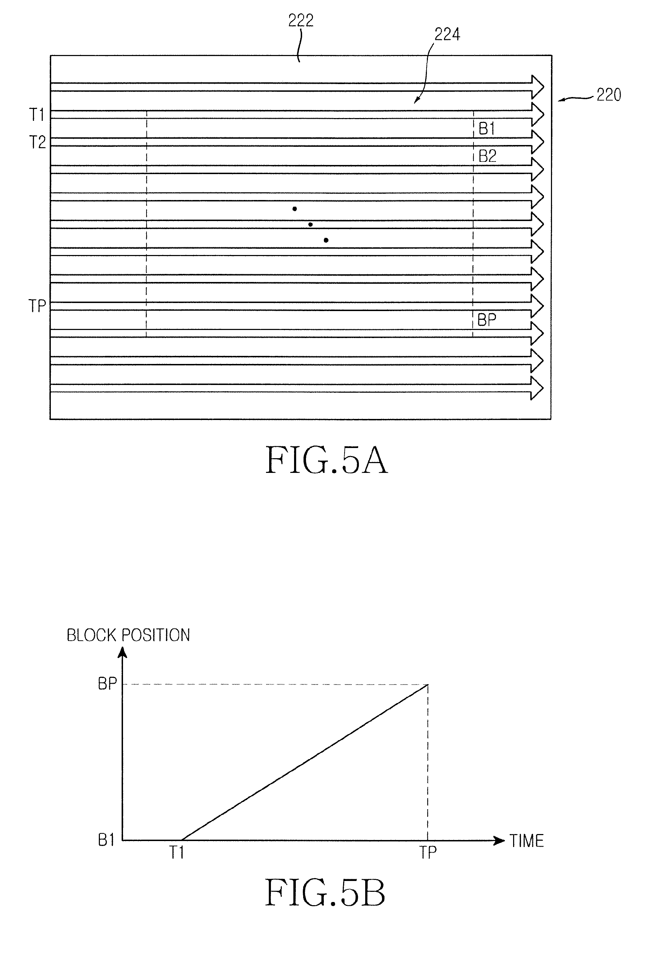

FIGS. 5A and 5B illustrate an exemplary movement pattern of the lens system 210 shown in FIG. 2, in which FIG. 5A shows that row-wise scanning operations are sequentially performed with respect to the AF window 224 of the image sensor 220 based on a rolling shutter mechanism, and FIG. 5B is a graphical representation showing a relationship between a row-wise scanning time and positions of sub-blocks B1~BP. In FIG. 5B, the horizontal axis indicates a time, and the vertical axis indicates positions of sub-blocks B1~BP being exposed. The lens system 210 is moved from the start position to the end position at a constant speed. At the same time when movement of the lens system 210 is completed, frame exposure for performing the autofocus procedure is completed. The above is collectively referred to as step (d).

As described above, in step (e), edge values of the sub-blocks B1~BP are obtained from a single image frame. Here, an "edge" corresponds to the contour of a subject, that is, the boundary of the image frame in which the brightness sharply changes. The "edge value" indicates a brightness change of an "edge" portion. In detail, the "edge value" is calculated by obtaining brightness of each of the respective pixels in the sub-blocks B1~BP, determining whether the boundary between a pair of pixels that are adjacent row-wise with respect to the image sensor 220 falls under the edge or not by comparing a brightness difference between the pair of pixels with a reference value, and cumulatively summing brightness differences of all pairs of pixels falling under the edge. The above is collectively referred to as step (e).

As described above, in step (f), the maximum edge value is determined among the edge values obtained in step (e).

In step (g), the lens system 210 is moved to a position corresponding to the maximum edge value. The position corresponding to the maximum edge value is a focus position of the lens system 210. As shown in FIG. 5B, the row-wise scanning time can be identified from a sub-block having the maximum edge value, and a position of the lens system 210 can be identified from the row-wise scanning time.

The autofocus procedure is completed by performing various operations up to step (g), and the camera 200 captures an image of a subject in a focus-adjusted state.

As described above, according to the present invention, the autofocus procedure is completed by a one-time frame exposure, thereby considerably reducing a time required for performing the autofocus procedure, unlike in the prior art in which frame exposure is repeatedly performed multiple times.

In addition, the autofocusing accuracy can be enhanced by repeatedly performing the autofocus procedure multiple times, which will be subsequently described.

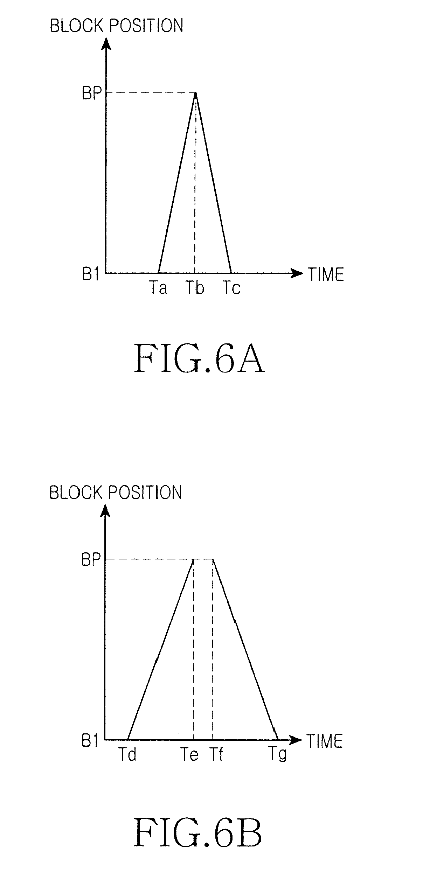

FIGS. 6A through 6C illustrate various exemplary movement patterns of the lens system 210 shown in FIG. 2, in which the horizontal axis indicates a time, and the vertical axis indicates positions of sub-blocks B1~BP being exposed. It should be understood that these exemplary patterns have been provided for explanatory purposes and the present invention is not limited to same.

Referring to FIG. 6A, during a time period between Ta and Tb, the lens system 210 is moved from the start position to the end position while the first frame is exposed. During a time period between Tb and Tc, the lens system 210 is moved from the end position to the start position while the second frame is exposed. For effectuating exposure of each of the respective frames, the steps (e) and (f) are performed, and the focus position of the lens system is identified based on the maximum edge value selected among the obtained edge values, followed by performing step (g), that is, moving the lens system 210 to a position corresponding to the maximum edge value.

Now referring to FIG. 6B, during a time period between Td and Te, the lens system 210 is moved from the start position to the end position while the first frame is exposed. During a time period between Te and Tf, the lens system 210 halts the movement. During a time period between Tf and Tg, the lens system 210 is moved from the end position to the start position while the second frame is exposed. For effectuating exposure of each of the respective frames, the steps (e) and (f) are performed, and the focus position of the lens system is identified based on the maximum edge value selected among the obtained edge values, followed by performing step (g). In other words, moving the lens system 210 to a position corresponding to the maximum edge value.

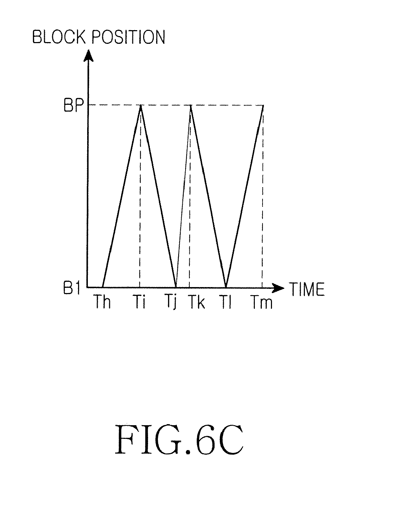

Now referring to FIG. 6C, a time period between Th and Ti, the lens system 210 is moved from the start position to the end position while the first frame is exposed. During a time period between Ti and Tj, the lens system 210 is moved from the end position to the start position while the second frame is exposed. During a time period between Tj and Tk, the lens system 210 is moved from the start position to the end position. During a time period between Tk and T1, the lens system 210 is moved from the end position to the start position while the third frame is exposed. During a time period between T1 and Tm, the lens system 210 is moved from the start position to the end position and the fourth frame is exposed. For effectuating exposure of each of the respective frames, the steps (e) and (f) are performed, and the focus position of the lens system is identified based on the maximum edge value selected among the obtained edge values, followed by performing step (g), that is, moving the lens system 210 to a position corresponding to the maximum edge value.

As described in the above examples, according to the present invention, the autofocus procedure is completed by a one-time frame exposure, thereby greatly reducing a time required for performing the autofocus procedure, unlike in the prior art in which frame exposure is repeatedly performed multiple times.

In addition, autofocusing accuracy can be enhanced by repeatedly performing the autofocus procedure multiple times, which can still be faster than the conventional autofocus procedure, and with better accuracy.

While the invention has been shown and described with reference to a certain preferred exemplary embodiment thereof, it will be understood by those skilled in the art that various changes in form and details may be made therein without departing from the spirit of the invention and the scope of the appended claims.

## Claims

1. An autofocus method comprising:
varying a distance between a focus of a lens system (210) and a light receiving plane (222) of an image sensor (220);
forming an image frame by sequentially exposing pixels on the light receiving plane during a time period of the varying of the distance between the focus and the light receiving plane;
setting a plurality of sub-blocks (B1~BP) on the formed image frame and obtaining edge values for the respective plurality of sub-blocks;
determining a maximum edge value among the obtained edge values; and
identifying a focus position of the lens system based on the maximum edge value.

2. The autofocus method of claim 1, wherein each of the plurality of sub-blocks comprises a plurality of pixel rows which are part of the light receiving plane.

3. The autofocus method of claim 1 or 2, wherein the forming of the image frame comprises forming the image frame on an autofocus (AF) window and positioning the image frame at the center of the light receiving plane.

4. The autofocus method of any one of claims 1 to 3, including arranging a plurality of pixels on the light receiving plane in a matrix format of multiple rows and multiple columns, and in the forming of the image frame, exposing pixels of each row column-wise in sequence, and exposing pixels of each column row-wise in sequence.

5. The autofocus method of any one of claims 1 to 4, wherein the varying of the distance comprises moving the lens system along its optical axis with the image sensor positioned at a fixed position.

6. The autofocus method of claim 5, further comprising moving the lens system to the focus position identified in the identifying of the focus position based on the maximum edge value.

7. The autofocus method of any one of claims 1 to 6, wherein the varying of the distance through the determining of the maximum edge value are repeatedly performed multiple times, and in the identifying of the focus position of the lens system, the focus position of the lens system is identified based on the maximum edge value among the obtained edge values.

8. The autofocus method according to any one of claims 1 to 6, wherein the autofocus procedure is completed by a one-time frame exposure.

9. The autofocus method according to any one of claims 1 to 6, wherein the varying of the distance through the determining of the maximum edge value includes the sub-steps of moving the lens system from a start position to an end position while a first frame is exposed and moving the lens system from the end position to the start position while a second frame is exposed.

10. The autofocus method according to claim 9, wherein the sub-steps further comprise moving the lens system from the start position to the end position, moving the lens system from the end position to the start position while a third frame is exposed, and moving the lens system from the start position to the end position while a fourth frame is exposed.

11. An autofocus device for a camera (200), comprising:
means (230, 232, 234) for varying a distance between a focus of a lens system (210) and a light receiving plane (222) of an image sensor (220);
means (250, 270) for forming an image frame by sequentially exposing pixels on the light receiving plane during a time period of the varying of the distance between the focus and the light receiving plane;
means (270) for setting a plurality of sub-blocks on the formed image frame and obtaining edge values for the respective plurality of sub-blocks;
means (270) for determining a maximum edge value among the obtained edge values; and
means (240, 242, 244) for identifying a focus position of the lens system based on the maximum edge value.

12. The apparatus according to claim 11, wherein each of the plurality of sub-blocks comprises a plurality of pixel rows which are part of the light receiving plane.

13. The apparatus according to claim 11 or 12, wherein the means for forming of the image frame comprises means for forming the image frame on an autofocus (AF) window and means for positioning the image frame at the center of the light receiving plane.

14. The apparatus according to any one of claims 11 to 13, further comprising means for arranging a plurality of pixels on the light receiving plane in a matrix format of multiple rows and multiple columns, and in the forming of the image frame, means for exposing pixels of each row column-wise in sequence and exposing pixels of each column row-wise in sequence.

15. The apparatus of any one of claims 11 to 14, wherein the means for varying of the distance comprises means for moving the lens system along its optical axis with the image sensor positioned at a fixed position.

16. The apparatus of claim 15, wherein the means for moving the lens system comprises means for moving the lens system to the focus position identified in the identifying of the focus position based on the maximum edge value.

17. An autofocus apparatus (200), comprising:
a lens system (210);
an image sensor (220) arranged in an optical axis of the lens system;
a driving unit (230) for driving the lens system;
an encoder (240) for detecting a position of the lens system;
an image signal processor (ISP, 250) for processing an image signal output from the image sensor;
a controller (270) for receiving an output of the encoder and for controlling the driving unit to move the lens system.

18. The apparatus according to claim 17, wherein the driving unit includes a guide (234) for moving the lens system along the optical axis.

19. The apparatus according to claim 18, where the encoder comprises a Hall sensor (242) arranged on the guide, and a magnet (244) arranged in a fixed position relative to the guide.
